# FASCICULE DE BREVET EUROPEEN

(11) **EP 3 196 526 B1**
(45) Date de publication et mention de la délivrance du brevet: **26.09.2018**
(21) Numéro de dépôt: 17152367.3
(22) Date de dépôt: 20.01.2017
(51) Int. Cl.: F16L 37/084, F16L 37/34

(54) **RACORD RAPIDE POUR LA JONCTION AMOVIBLE DE CANALISATIONS DE FLUIDE SOUS PRESSION**
SCHNELLKUPPLUNG FÜR DIE LÖSBARE VERBINDUNG VON LEITUNGEN FÜR FLUIDE UNTER DRUCK
QUICK COUPLING FOR THE DISCONNECTABLE CONNECTION OF PIPELINES FOR FLUIDS UNDER PRESSURE

(30) Priorité: 22.01.2016 FR 1650515
(43) Date de publication de la demande: 26.07.2017
(73) Titulaire: Staubli Faverges, 74210 Faverges (FR)
(72) Inventeur: TIBERGHIEN, Alain-Christophe, 74320 SEVRIER (FR); DURIEUX, Christophe, 73200 GILLY SUR ISERE (FR); MOREL, Frédéric, 74210 LATHUILE (FR)
(74) Mandataire: Lavoix

(56) Documents cités:
- DE-A1- 10 304 151
- FR-A- 1 185 471
- US-A- 2 727 759
- US-A1- 2010 201 123

## Description

L'invention concerne un raccord rapide conçu pour connecter de façon amovible des canalisations parcourues par un fluide sous pression. De telles canalisations sont utilisées dans de nombreux systèmes embarqués, comme par exemple dans un système de refroidissement hydraulique d'un véhicule automobile. De manière connue, un raccord comprend un élément mâle et un élément femelle complémentaires.

Dans le domaine des raccords rapides pour des systèmes de refroidissement, la société STÄUBLI FAVERGES a développé une gamme de raccord vendue sous la référence SPT. En particulier, le raccord SPT10 comprend un élément mâle, appelé about, et un élément femelle. L'élément femelle comprend un corps cylindrique creux délimitant une surface radiale interne et une surface radiale externe et comprenant une série d'ouvertures radiales dans lesquelles sont logées des billes de verrouillage. Ces billes de verrouillage sont mobiles radialement entre une première position dans laquelle elles font saillie vers l'intérieur par rapport à la surface radiale interne du corps et une deuxième position, dans laquelle elles font saillie vers l'extérieur par rapport à la surface radiale externe du corps. Les billes sont maintenues dans leur première position par une bague de verrouillage montée autour du corps de l'élément femelle.

L'élément mâle comprend également un corps cylindrique creux, qui délimite un passage intérieur pour le fluide, qui est prévu pour être engagé à l'intérieur du corps femelle et qui comprend une surface radiale externe délimitant une gorge périphérique de réception des billes.

Lors de l'accouplement des éléments mâle et femelle du raccord SPT10, il convient de reculer la bague de verrouillage pour libérer les billes. Le corps mâle chasse alors les billes de verrouillage vers l'extérieur. Lorsque la gorge périphérique du corps mâle parvient axialement en regard des billes, celles-ci tombent alors dans la gorge et la bague de verrouillage est rappelée élastiquement en position de recouvrement. Le raccord est alors verrouillé.

Bien que fonctionnant correctement, ce raccord présente plusieurs inconvénients :
- un premier inconvénient est que les contacts successifs entre les billes de verrouillage et la gorge de l'élément mâle induisent à long terme une déformation plastique localisée, ou matage, du corps de l'élément mâle. Ce matage peut conduire à l'apparition de bourrelets ou d'incrustations susceptibles de gêner le bon fonctionnement du raccord et de limiter sa durée de vie.
- un deuxième inconvénient de ce raccord est que le verrouillage n'est pas automatique car il est nécessaire de reculer manuellement la bague de verrouillage pour libérer les billes de verrouillage et introduire le corps mâle dans le corps femelle. La bague de verrouillage doit être maintenue en arrière au moins jusqu'à ce que la gorge périphérique du corps mâle parvienne en regard des billes ;
- un troisième inconvénient de ce raccord est qu'il est relativement encombrant dans le sens radial du fait de la présence de la bague de verrouillage autour du corps femelle.

Parmi les publications existantes sur le sujet, FR-A-1 185 471 et US-A-2 727 759 divulguent chacun un raccord selon le préambule de la revendication 1. Toutefois, ces raccords utilisent des billes comme organes de verrouillage, ce qui entraine le matage du corps mâle à long terme.

DE-A-103 04 151, qui divulgue également un raccord rapide selon le préambule de la revendication 1, a pour avantage que les organes de verrouillage ne sont pas des billes, mais des tronçons de bague. Cela permet d'obtenir un contact linéique avec le corps mâle, ce qui limite les déformations plastiques à long terme. Néanmoins, l'élément femelle comprend un capot extérieur et un corps avec deux étages radiaux pour maintenir les organes de verrouillage. Ce raccord est donc relativement peu compact dans le sens radial.

C'est à ces inconvénients qu'entend plus particulièrement remédier l'invention en proposant un raccord rapide à verrouillage automatique, avec une durée de vie augmentée et avec un encombrement radial réduit.

A cet effet, l'invention concerne un raccord rapide pour la jonction amovible de canalisation de fluide sous pression, ce raccord comprenant un élément mâle et un élément femelle destinés à être accouplés l'un avec l'autre, l'élément femelle comportant :
- un corps cylindrique creux centré sur un axe central et comportant une surface radiale interne et une surface radiale externe et délimitant une ouverture radiale, et
- un élément de verrouillage, comprenant un organe qui est mobile en translation, suivant un axe de translation radial par rapport à l'axe central, à l'intérieur de l'ouverture radiale, laquelle est apte à guider l'organe entre une première position, dans laquelle l'organe fait saillie vers l'intérieur par rapport à la surface radiale interne et une deuxième position, dans laquelle l'organe fait saillie vers l'extérieur par rapport à la surface radiale externe et dans laquelle l'organe ne fait pas saillie vers l'intérieur par rapport à la surface radiale interne,
l'élément mâle comportant :
- un corps cylindrique creux, qui est prévu pour être engagé à l'intérieur du corps cylindrique creux de l'élément femelle et qui comprend une surface périphérique extérieure pourvue d'une gorge périphérique de réception de l'organe mobile,
- une bague de verrouillage qui est mobile axialement entre une position de verrouillage, dans laquelle elle entoure la gorge périphérique et une position déverrouillée, dans laquelle elle n'entoure pas la gorge périphérique, l'élément de verrouillage étant apte à entrainer la bague de verrouillage de sa position de verrouillage vers sa position déverrouillée lorsque son organe est dans sa deuxième position, et
- des moyens de rappel de la bague de verrouillage en position de verrouillage.
Conformément à l'invention, l'élément de verrouillage comporte au moins un bras élastique apte à rappeler l'organe vers sa première position.

Grâce à l'invention, lorsqu'on rapproche les deux éléments de raccord, le corps cylindrique creux de l'élément mâle pousse automatiquement l'organe mobile de l'élément de verrouillage dans sa deuxième position, de sorte que la poursuite du mouvement d'accouplement entraine le déplacement de la bague de verrouillage de sa position verrouillée vers sa position déverrouillée au contact de l'organe mobile de l'élément de verrouillage. Le déplacement de la bague de verrouillage se poursuit jusqu'à ce que l'organe mobile de l'élément de verrouillage parvienne au même niveau que la gorge périphérique de la surface périphérique extérieure du corps cylindrique creux de l'élément mâle. A ce moment, l'organe mobile de l'élément de verrouillage revient en première position et la bague de verrouillage est rappelée automatiquement en position de verrouillage. Le verrouillage du raccord en configuration accouplé s'effectue donc simplement en engageant le corps de l'élément mâle à l'intérieur du corps de l'élément femelle. Par ailleurs, le raccord est compact dans le sens radial car la bague de verrouillage et ses moyens de rappel sont agencés autour du corps cylindrique creux de l'élément mâle, lequel présente un diamètre extérieur qui, par définition, est inférieur à celui du corps cylindrique creux de l'élément femelle. En outre, un organe mobile différent d'une bille peut être utilisé, ce qui permet d'éviter un contact ponctuel entre l'organe mobile et la gorge périphérique et de limiter ainsi le matage du corps de l'élément mâle à long terme.

Selon des aspects avantageux mais non obligatoires de l'invention, un tel raccord peut comporter une ou plusieurs des caractéristiques suivantes:
- L'organe comprend un chanfrein propre à coopérer lors de l'accouplement avec une arête de jonction entre la surface périphérique extérieure et une surface axiale d'extrémité du corps cylindrique creux de l'élément mâle;
- L'organe comprend un chanfrein propre à coopérer avec un bord complémentaire de la gorge périphérique en configuration accouplée ;
- La bague de verrouillage comprend, à une extrémité axiale, un chanfrein intérieur propre à coopérer avec l'organe lors de l'accouplement ;
- L'élément de verrouillage est en matière plastique ;
- L'élément de verrouillage comprend deux bras élastiques qui s'étendent de manière symétrique à partir de l'organe ;
- Chaque bras élastique est en un arc de cercle, le rayon de courbure de la surface radiale interne du bras étant identique au rayon de courbure de la surface radiale externe du corps cylindrique creux de l'élément femelle ;
- Chaque bras élastique est reçu dans une rainure s'étendant de manière périphérique sur la surface radiale externe du corps cylindrique creux de l'élément femelle ;
- Chaque bras s'étend de sorte que son extrémité libre délimite avec un plan de symétrie de l'organe un angle qui est compris entre 90° et 120°;
- L'organe mobile ne fait pas saille vers l'extérieur par rapport à la surface radiale externe du corps cylindrique creux de l'élément femelle lorsqu'il se trouve dans sa première position ;
- L'élément femelle comprend deux éléments de verrouillage, alors que le corps cylindrique creux de l'élément femelle délimite deux ouvertures radiales diamétralement opposées pour recevoir les organes mobiles respectifs des éléments de verrouillage ;
- La projection de l'organe mobile sur un plan perpendiculaire à l'axe de translation radial présente un contour non circulaire. De préférence, la projection de l'organe mobile sur le plan perpendiculaire à l'axe de translation radial présente un contour rectangulaire. On peut, en outre prévoir que la projection de l'organe mobile sur le plan perpendiculaire à l'axe de translation radial s'étend sur une longueur transversale comprise entre 10 et 50% de la valeur du diamètre définissant la surface radiale interne du corps cylindrique de l'élément femelle et notamment égal à 40%.
- L'élément mâle comporte une soupape contenue dans le corps cylindrique creux et rappelée vers une position de fermeture d'un volume de passage de fluide, dans laquelle les extrémités avant du corps cylindrique creux de l'élément mâle et de la soupape définissent une surface plane, alors que l'élément femelle comporte un poussoir placé à l'intérieur du corps cylindrique creux et apte à repousser la soupape de l'élément mâle lors de l'accouplement et un clapet placé entre la partie avant du poussoir et le corps cylindrique creux et rappelé par un ressort vers une position de fermeture d'un volume de passage de fluide, dans laquelle les extrémités avant du poussoir et du clapet définissent une surface plane située en arrière des éléments de verrouillage.

L'invention et d'autres avantages de celle-ci apparaitront plus clairement à la lumière de la description qui va suivre de quatre modes de réalisation d'un raccord rapide conforme à son principe, donnée uniquement à titre d'exemple et faite en référence aux dessins annexés dans lesquels :
- la figure 1 est une vue en perspective d'un élément femelle faisant partie d'un raccord fluidique selon un premier mode de réalisation de l'invention, deux éléments de verrouillage appartenant à l'élément femelle étant représentés à part sur cette figure,
- la figure 2 est une coupe longitudinale de l'élément femelle de la figure 1, dans laquelle les deux éléments de verrouillage sont mis en place,
- la figure 3 est une coupe selon la ligne III-III à la figure 2,
- la figure 4 est une coupe selon la ligne IV-IV de la figure 2,
- la figure 5 est une coupe longitudinale d'un élément de raccord mâle complémentaire de l'élément femelle des figures 1 à 4,
- la figure 6 est une coupe longitudinale à plus petite échelle du raccord formé des éléments femelle et mâle des figures 1 à 5, à un premier stade de l'accouplement,
- la figure 7 est une coupe analogue à la figure 6, à un stade ultérieur de l'accouplement,
- la figure 8 est une coupe analogue aux figures 6 et 7, dans laquelle le raccord est représenté en configuration accouplée,
- la figure 9 est une vue à plus grande échelle de l'encerclé IX de la figure 8,
- les figures 10 et 11 sont des vues en perspective représentant deux variantes de réalisation d'un élément de verrouillage, appartenant respectivement à un raccord selon un deuxième et un troisième mode de réalisation de l'invention,
- la figure 12 est une coupe partielle selon la ligne XII-XII à la figure 4, et
- la figure 13 est une coupe partielle analogue à la figure 12 pour un élément appartenant à un raccord selon un quatrième mode de réalisation de l'invention.

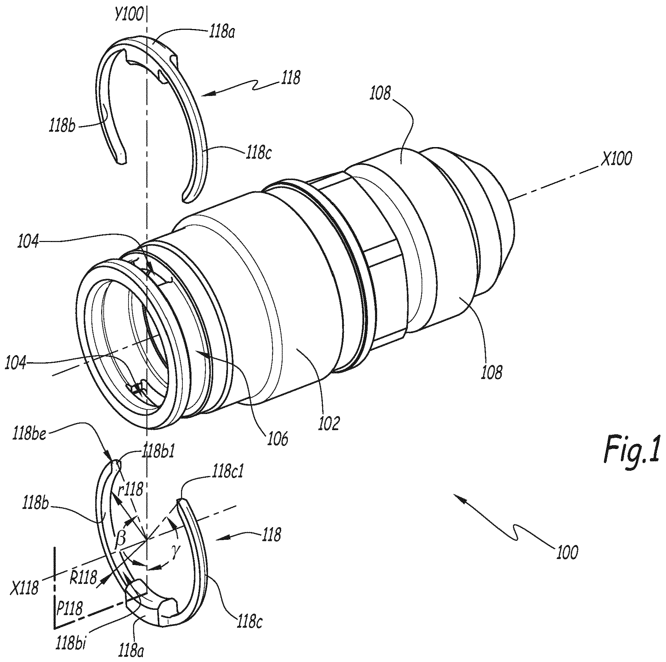

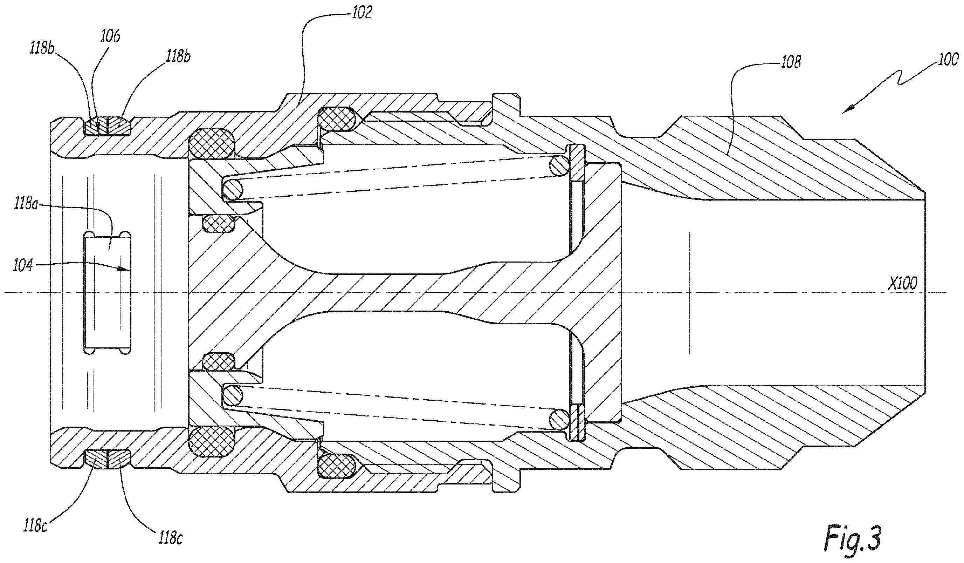

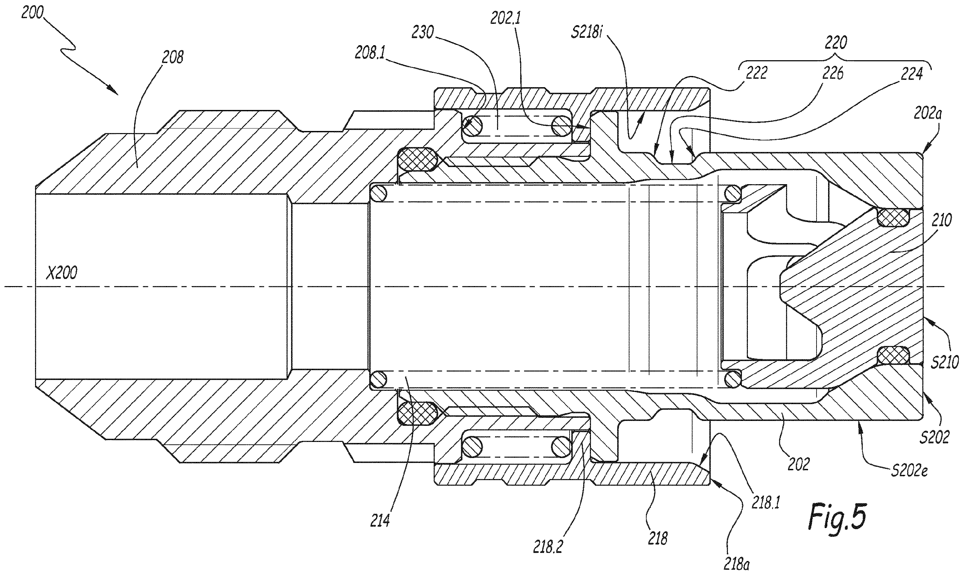

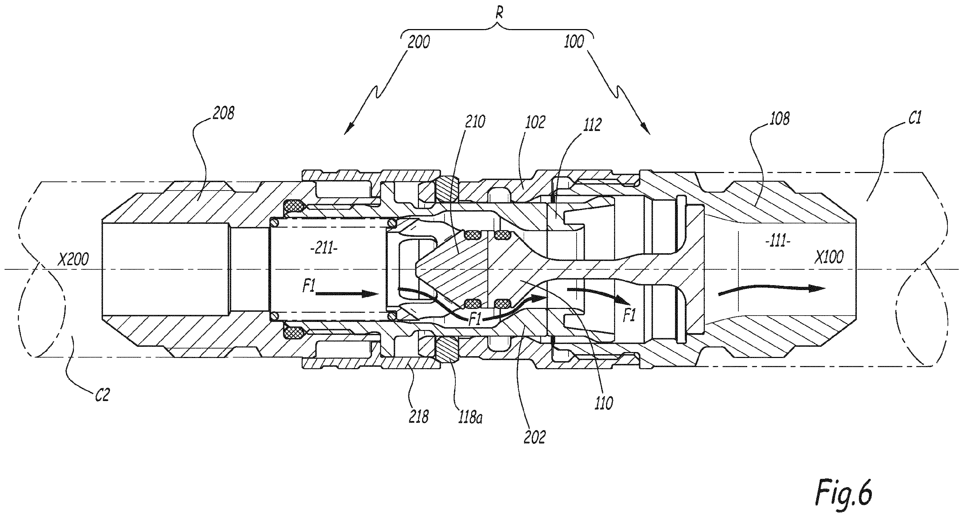

Sur les figures 6 à 9 est représenté un raccord fluidique R destiné à la jonction amovible de canalisations C1 et C2 de fluide sous pression. A titre d'exemple, les canalisations C1 et C2 peuvent être utilisées dans un système de refroidissement hydraulique d'un véhicule automobile. Le raccord fluidique R comprend un élément femelle 100, représenté seul aux figures 1 à 4, et un élément mâle 200, représenté seul à la figure 5. Les éléments de raccord 100 et 200 sont destinés à être accouplés l'un avec l'autre et sont respectivement raccordés aux canalisations C1 et C2.

Comme visible à la figure 1, l'élément femelle 100 présente une géométrie sensiblement tubulaire centrée sur un axe central X100.

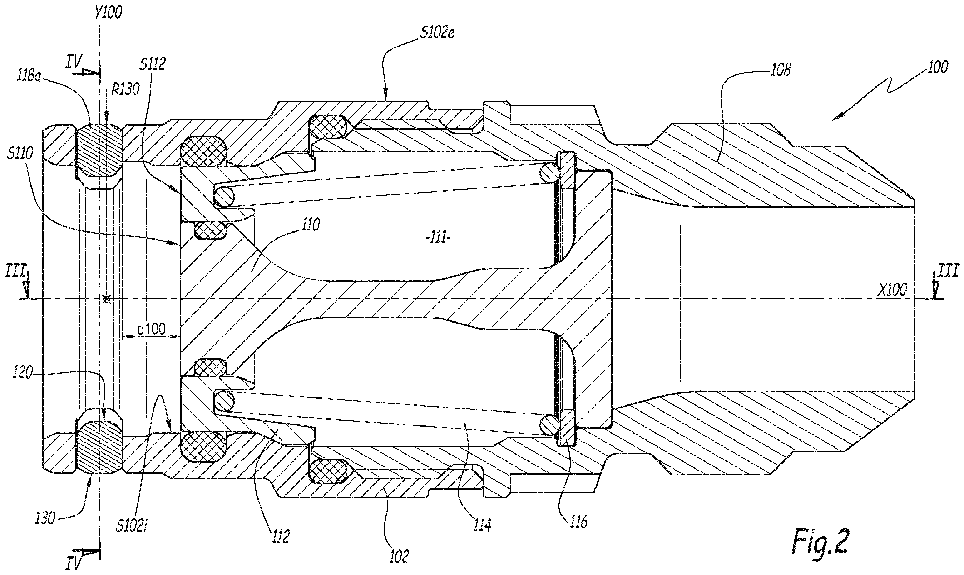

Dans ce qui suit, une direction avant exprimée en relation avec un élément de raccord est une direction axiale orientée vers l'élément de raccord complémentaire. De même, une direction arrière exprimée en relation avec un élément de raccord est une direction axiale orientée vers la canalisation à laquelle est connecté l'élément de raccord. Dans l'exemple de la figure 2, la direction avant est une direction orientée vers la gauche, alors que la direction arrière est une direction orientée vers la droite. Par ailleurs, une direction intérieure correspond à une direction radiale centripète par rapport à l'axe du raccord, alors qu'une direction extérieure est une direction radiale centrifuge par rapport à l'axe du raccord.

Comme visible à la figure 2, l'élément femelle 100 comprend un adaptateur creux 108 définissant un passage pour le fluide et supportant des moyens de fixation à la canalisation C1. Un corps cylindrique creux 102 de l'élément femelle 100 est centré sur l'axe central X100 et vissé de manière étanche sur la partie avant de l'adaptateur 108. Le corps cylindrique creux 102 délimite une surface radiale interne S102i et une surface radiale externe S102e.

Comme visible à la figure 1, l'élément femelle 100 comprend également un premier élément de verrouillage 118 comportant un organe 118a, qui est reçu, avec un certain jeu, à l'intérieur d'une ouverture radiale 104 délimitée par le corps cylindrique creux 102 de l'élément femelle 100. L'ouverture 104 a un contour rectangulaire avec des dimensions transversales comparables à celles de l'organe 118a. Elle comporte deux surfaces axiales parallèles et deux surfaces parallèles et équidistantes à un plan radial contenant l'axe central X100.

L'organe 118a est mobile en translation suivant un axe de translation Y100 radial à l'axe central X100 à l'intérieur de l'ouverture radiale 104. Cette ouverture radiale 104 est prévue pour guider l'organe 118a dans son mouvement de translation radial entre une première position, dans laquelle l'organe 118a fait saillie vers l'intérieur par rapport à la surface radiale interne S102i du corps 102 et une deuxième position, dans laquelle l'organe 118a fait saillie vers l'extérieur par rapport à la surface radiale externe S102e du corps 102 et dans laquelle l'organe 118a ne fait pas saillie vers l'intérieur par rapport à la surface radiale interne S102i du corps 102. L'organe 118a ne peut pas tourner autour de son axe de déplacement, c'est-à-dire autour d'un axe radial. D'ailleurs, l'organe 118a n'a qu'un seul degré de liberté à l'intérieur de l'ouverture 104.

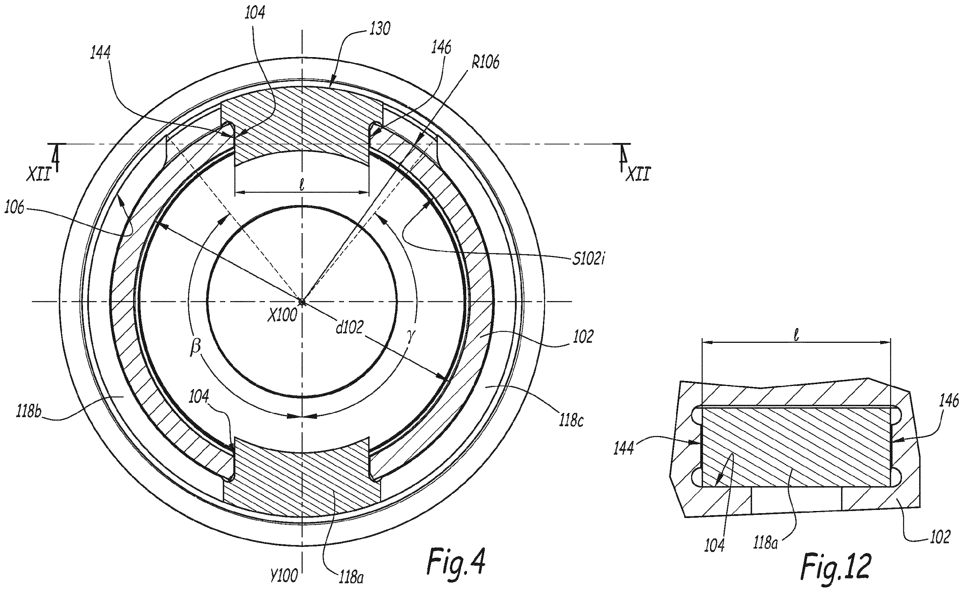

L'organe 118a comprend un plan de symétrie formé par un plan radial P118 qui contient l'axe de translation radial Y100 et coupe l'organe 118a en deux parties identiques, ce plan étant représenté uniquement à la figure 1. L'organe 118a est une portion de bague centrée sur un axe X118 et s'étend entre deux faces d'extrémités 144 et 146 parallèles et équidistantes du plan de symétrie P118 destinées à être engagées dans une des ouvertures 104. Comme visible aux figures 4, et 12, la projection de l'organe 118a sur un plan perpendiculaire à l'axe de translation radial Y100 présente un contour rectangulaire et s'étend sur une longueur transversale ℓ comprise entre 10 et 50% de la valeur du diamètre d102 de la surface radiale interne S102i du corps cylindrique 102, notamment égal à 40% de ce diamètre. La longueur transversale ℓ correspond à la distance entre les deux faces d'extrémités 144 et 146 de l'organe 118a.

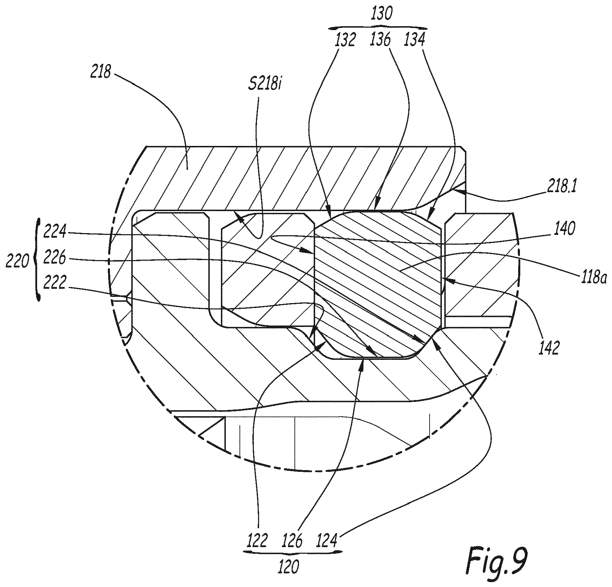

Comme visible à la figure 9, l'organe 118a comprend deux faces axiales, respectivement 140 et 142, qui sont des surfaces perpendiculaires à l'axe central X100, une face radiale intérieure 120 et une face radiale extérieure 130. Les faces d'extrémité 144 et 146 relient les faces axiales 140 et 142.

La face radiale intérieure 120 comprend une surface cylindrique 126 et deux surfaces tronconiques 122 et 124. Les surfaces tronconiques 122 et 124 forment des chanfreins qui relient respectivement la surface cylindrique 126 aux deux faces axiales 140 et 142. Les chanfreins 122 et 124 sont inclinés de 30 à 75 degrés par rapport à l'axe central X100, de préférence 50 degrés. La face extérieure 130 comprend une surface cylindrique 136 et deux surfaces tronconiques 132 et 134. Les surfaces tronconiques 132 et 134 forment des chanfreins qui relient respectivement la surface cylindrique 136 aux deux faces axiales 140 et 142. Les chanfreins 132 et 134 sont inclinés de 15 à 60 degrés par rapport à l'axe X118, de préférence 30 degrés.

Le premier élément de verrouillage 118 comprend également un premier bras 118b en arc de cercle qui s'étend dans le prolongement de l'organe 118a. Autrement dit, le bras 118b s'étend, à partir de l'organe 118a, selon une direction périphérique autour de l'axe central X100.

Le bras 118b est reçu dans une rainure 106 s'étendant, à partir de l'ouverture 104, de manière périphérique sur la surface radiale externe S102e du corps 102. Dans l'exemple, la rainure 106 présente la même largeur que l'ouverture radiale 104, cette largeur étant mesurée parallèlement à l'axe central X100.

Le rayon de courbure r118 de la surface radiale interne 118bi du bras 118b est identique au rayon de courbure R106 du fond de la rainure 106 du corps cylindrique creux 102 de l'élément femelle 100. Le fond de la gorge 106 est la zone d'appui du bras 118b sur le corps 102. Dans le cas où le corps 102 n'est pas pourvu d'une rainure 106, le rayon R106 considéré ici est le rayon de la surface S102e au niveau de la zone d'appui des bras 118b et 118c. Le rayon de courbure R118 de la surface radiale externe 118be du bras 118b est identique au rayon de courbure R130 de la face extérieure 130. Le bras 118b est attaché sur la face d'extrémité 144 de l'organe 118a, laquelle est parallèle à l'axe Y100 et à un plan radial à l'axe central X100 en configuration montée de l'élément de verrouillage 118 dans l'élément femelle 100.

Les faces d'extrémité 144 et 146 de l'organe 118a comportent chacune quatre coins, respectivement deux coins intérieurs et deux coins extérieurs. Le bras 118b s'étend à partir d'un coin extérieur de la face 144. Il est lié de manière affleurante avec le chanfrein 132 de la face extérieure 130 et avec la face axiale avant 140. Le bras 118c s'étend à partir d'un coin extérieur de la face 146. Il est également lié de façon affleurante avec le chanfrein 132.

Le bras 118b présente une épaisseur, mesurée parallèlement à l'axe central central X100, qui est inférieure de moitié à celle de l'organe 118a de l'élément de verrouillage 118. Le bras 118b a donc, du fait de sa forme longiligne et de sa faible épaisseur, une certaine élasticité ; c'est pourquoi, on parle d'un bras élastique 118b. En particulier, le bras élastique 118b se déforme élastiquement lorsque l'organe se déplace de sa première position vers sa deuxième position et est apte à rappeler, par retour élastique de la matière, l'organe 118a dans sa première position. Ainsi, le bras 118b permet de maintenir l'élément de verrouillage 118 au plus près du corps 102 de l'élément femelle 100, ce qui réduit les risques de détérioration, voire d'arrachement, de l'élément 118.

Avantageusement, le premier élément de verrouillage 118 comprend un deuxième bras élastique 118c, qui est le symétrique du premier bras 118b par rapport au plan de symétrie P118 de l'organe 118a. L'organe 118a forme donc un corps sur lequel sont attachés, de part et d'autre, deux bras 118b et 118c. Ainsi, les efforts élastiques de rappel exercés par les deux bras 118b et 118c sont purement radiaux, ce qui améliore la qualité du guidage de l'organe 118a à l'intérieur de l'ouverture 104.

De manière avantageuse, les bras 118b et 118c s'étendent chacun de manière que leur extrémité libre dépasse un angle de 90° par rapport au plan de symétrie P118 de l'élément de verrouillage 118. Plus précisément, chaque bras 118b et 118c s'étend de sorte que son extrémité libre 118b1 ou 118c1 délimite avec le plan de symétrie P118 de l'organe 118a un angle β ou γ autour de l'axe central X118 de l'élément de verrouillage 118 qui est compris entre 100° et 150°, notamment égal à 140°. Les bras 118b et 118c permettent alors de maintenir l'élément de verrouillage 118 sur le corps 102 de l'élément femelle 100 en configuration désaccouplée.

Dans l'exemple et comme visible à la figure 1, l'élément femelle 100 comprend un deuxième élément de verrouillage 118, qui est identique au premier élément de verrouillage et qui comporte un organe 118a qui est reçu dans une seconde ouverture radiale 104 pratiquée dans le corps 102, les deux ouvertures radiales 104 étant diamétralement opposées. Cette construction à deux éléments de verrouillage 118 permet d'améliorer la tenue de l'accouplement à la force de répulsion due à la pression du fluide par rapport à une construction à un seul élément de verrouillage.

En configuration désaccouplée, les éléments de verrouillage 118 sont entièrement contenus dans la rainure 106 et les ouvertures 104. Autrement dit, lorsque l'organe 118a est dans sa première position, il ne dépasse pas par rapport à la surface radiale externe S102e du corps 102. De plus, l'axe X118 est confondu avec l'axe central X100.

Les deux éléments de verrouillage 118 sont monoblocs, par exemple obtenus par usinage d'une ébauche en acier ou en matière plastique ou par moulage par injection de matière plastique.

La rainure 106 relie les ouvertures 104 de chaque côté. Elle s'étend donc sur la totalité de la circonférence du corps 102.

Comme visible à la figure 1, les deux éléments de verrouillage 118 sont montés de manière inversée l'un par rapport à l'autre. Ainsi, en configuration assemblée, les organes respectifs 118a des deux éléments de verrouillage 118 sont diamétralement opposés l'un à l'autre et les bras élastiques 118b des deux éléments de verrouillage 118 sont disposés l'un à côté de l'autre à l'intérieur de la rainure 106.

Comme visible à la figure 2, un poussoir 110 est disposé coaxialement à l'intérieur du corps cylindrique creux 102. La partie arrière du poussoir 110 comporte des ouvertures non représentées pour le passage du fluide. Le poussoir 110 est fixé à l'adaptateur 108. Plus précisément, la partie arrière du poussoir 110 forme une couronne qui est en butée contre un épaulement axial interne de l'adaptateur 108. Une rondelle 116 est immobilisée à l'intérieur d'un logement périphérique de l'adaptateur 108 et maintient la partie arrière du poussoir 110 contre l'épaulement axial de l'adaptateur 108. La rondelle 116 peut être fendue, de type circlip.

Un clapet 112 est disposé coaxialement entre le poussoir 110 et le corps cylindrique creux 102 de l'élément femelle 100. Dans la configuration désaccouplée de la figure 2, le clapet 112 est dans une position fermée dans laquelle il obture de manière étanche l'espace entre le poussoir 110 et le corps cylindrique creux 102 de l'élément femelle 100. Dans cette configuration, le clapet 112 obture un volume 111 de passage de fluide autour du poussoir 110 et les surfaces axiales d'extrémité avant du poussoir 110 et du clapet 112, respectivement référencées S110 et S112, sont situées dans un même plan, lequel est perpendiculaire à l'axe central X100 de l'élément femelle 100 et est disposé en arrière par rapport aux éléments de verrouillage 118. Autrement dit, les surfaces S110 et S112 sont affleurantes et situées en retrait de la gorge 106 et des ouvertures 104 d'une distance axiale d100 qui est non nulle. Le clapet 112 est rappelé en configuration d'obturation par des moyens élastiques. Dans l'exemple, les moyens élastiques comprennent un ressort 114.

L'élément mâle 200 de la figure 5 présente également une géométrie sensiblement tubulaire centrée sur un axe X200. L'élément mâle 200 comporte un adaptateur creux 208 définissant un passage pour le fluide et supportant des moyens de fixation à la canalisation C2.

L'élément mâle 200 comporte également un corps cylindrique creux 202 qui est vissé de manière étanche sur la partie avant de l'adaptateur 208. Le corps cylindrique creux 202 définit un alésage interne pour le passage de fluide et comprend une surface périphérique extérieure S202e pourvue d'une gorge périphérique 220 de réception de l'organe 118a de chaque élément de verrouillage 118. La gorge périphérique 220 comprend un fond 226 et deux bords, respectivement 222 et 224. Le bord 222 constitue un bord arrière, alors que le bord 224 constitue un bord avant. De façon avantageuse, les bords 222 et 224 sont des surfaces tronconiques inclinées de manière complémentaire avec les chanfreins 122 et 124 de l'organe 118a. Dans la configuration accouplée, le contact entre l'élément de verrouillage 118 et la gorge périphérique 220 supporte les efforts de répulsion et s'étend sur un arc de cercle et non un point comme pour les billes des raccords de l'art antérieur. Le raccord R selon l'invention est ainsi plus robuste que ceux de l'art antérieur car les billes sont à l'origine du matage de la gorge périphérique après des opérations successives d'accouplement et de désaccouplement. La durée de vie du raccord R est donc augmentée par rapport à celle des raccords à billes de verrouillage.

Une bague de verrouillage 218 est montée, de manière mobile suivant une direction axiale, autour du corps cylindrique creux 202 de l'élément mâle 200. La bague de verrouillage 218 comprend, à une extrémité axiale avant, un chanfrein intérieur 218.1 propre à coopérer avec la face extérieure 130 de l'organe 118a lors de l'accouplement de l'élément mâle 200 avec l'élément femelle 100. Ce chanfrein 218.1 est une surface tronconique qui converge vers l'axe central X200 dans la direction arrière. Il relie une surface radiale interne S218i de la bague 218 avec une face axiale d'extrémité avant 218a de la bague 218. Avantageusement, le chanfrein 218.1 est incliné de manière complémentaire avec le chanfrein 132. Le chanfrein 218.1 est incliné de 15 à 60 degrés par rapport à l'axe X200 et préférentiellement de 30 degrés.

La bague de verrouillage 218 comprend une collerette intérieure 218.2. Dans la configuration de la figure 5, la bague de verrouillage 218 se trouve dans une position avancée, dite position de verrouillage, dans laquelle la collerette radiale interne 218.2 est en butée contre un épaulement externe 202.1 du corps 202 et dans laquelle la bague 218 entoure la gorge 220. La bague de verrouillage 218 est maintenue par défaut dans cette position par des moyens de rappel. Dans l'exemple, ces moyens de rappel comprennent un ressort 230 de compression qui agit entre la collerette radiale interne 218.2 de la bague de verrouillage 218 et un épaulement 208.1 de l'adaptateur 208 orienté vers l'avant de l'élément mâle 200.

L'élément mâle 200 comprend également une soupape 210 de fermeture du volume 211 de passage de fluide. La soupape 210 est disposée à l'intérieur du corps cylindrique creux 202. Dans la configuration désaccouplée de la figure 5, la soupape 210 se trouve dans une position de fermeture. Elle est maintenue dans cette position par des moyens de rappel. Dans l'exemple, les moyens comprennent un ressort 214.

Dans la configuration désaccouplée de la figure 5, les surfaces axiales d'extrémité avant, respectivement S210 et S202, de la soupape 210 et du corps 202, sont situées dans un même plan perpendiculaire à l'axe central X200 de l'élément mâle 200. Autrement dit, les surfaces S210 et S202 sont affleurantes.

On note 202a une arête de fonction, qui est arrondie, entre les surfaces S202 et S202e.

Les pièces constitutives des éléments 100 et 200 sont des pièces usinées, à l'exception des ressorts hélicoïdaux 114, 214 et 230. Dans l'exemple, les pièces usinées sont en acier. Toutefois, il est possible d'usiner ou de mouler les pièces dans un autre matériau, comme l'aluminium ou la matière plastique. Par exemple, une matière plastique appropriée pour le moulage ou l'usinage est le polyetheretherketone (PEEK), avantageusement chargé en fibres de carbone.

L'accouplement de l'élément mâle 200 avec l'élément femelle 100 est décrit ci-après en relation avec les figures 6 à 9.

Pour accoupler le raccord R, il convient de rapprocher l'élément mâle 200 de l'élément femelle 100 pour faire pénétrer, avec un certain jeu radial, le corps 202 de l'élément mâle 200 à l'intérieur du corps 102 de l'élément femelle 100. A ce stade, l'axe central X100 de l'élément femelle 100 est confondu avec l'axe central X200 de l'élément mâle 200.

L'arête 202a du corps cylindrique creux 202 de l'élément mâle 200 parvient alors au contact du chanfrein avant 122 de l'organe 118a de chaque élément de verrouillage 218 et pousse les organes 118a radialement vers l'extérieur. Le chanfrein avant 122 est donc propre à coopérer avec le corps cylindrique creux 202 de l'élément mâle 200 lors de l'accouplement. Les organes 118a se déplacent alors de leur première position vers leur deuxième position, ce qui a pour effet de déformer élastiquement les bras 118b et 118c. Dans leur deuxième position, les organes 118a ne font plus saillie vers l'intérieur par rapport à la surface interne S102i du corps cylindrique creux 102 c'est-à-dire qu'ils ne s'opposent pas à l'avancement du corps cylindrique creux 202 de l'élément mâle 200.

La poursuite de l'accouplement entraine que les organes 118a, alors dans leur deuxième position, parviennent au contact de la bague de verrouillage 218 et poussent celle-ci vers l'arrière à l'encontre de l'effort exercé par le ressort 230. La bague 218 se déplace donc au contact des organes 118a, de sa position de verrouillage, vers une position déverrouillée, dans laquelle elle n'entoure et ne recouvre plus la gorge périphérique 220. Le ressort 230 est comprimé.

A un stade ultérieur de l'accouplement représenté à la figure 6, le poussoir 110 de l'élément femelle 100 repousse la soupape 210 vers l'arrière, à l'encontre de l'effort exercé par le ressort 214, et le corps cylindrique creux 202 de l'élément mâle 200 pousse le clapet 112 vers l'arrière à l'encontre de l'effort exercé par le ressort 114. Le fluide peut alors circuler entre le poussoir 110 et le corps cylindrique creux 102 de l'élément femelle 100, comme représenté par les flèches F1 à la figure 6, ou en sens inverse.

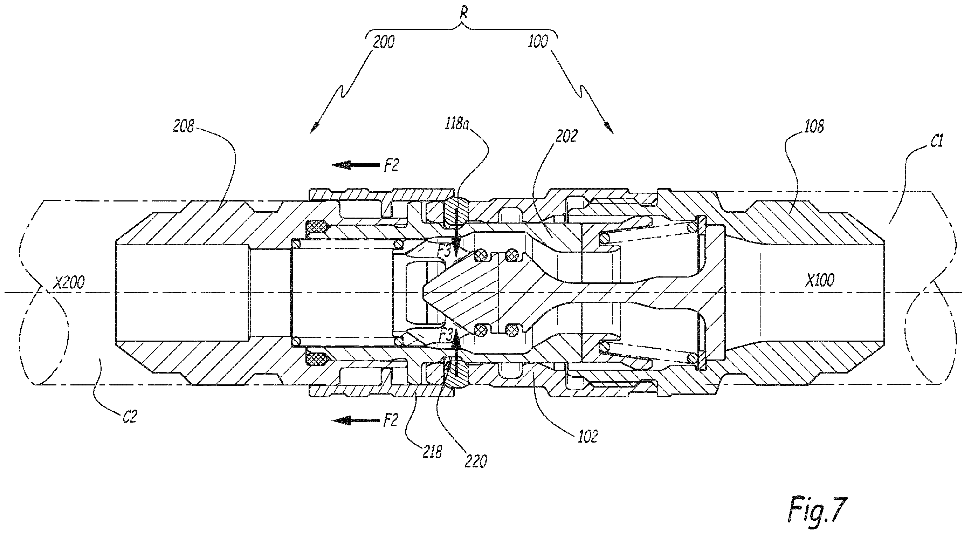

L'organe 118a de chaque élément de verrouillage 118 continue de pousser la bague 218 dans le sens des flèches F2 à la figure 7, jusqu'à parvenir au même niveau axial, le long des axes X100 et X200 confondus, que la gorge périphérique 220. Parvenue dans cette position, la bague 218 n'entoure pas la gorge périphérique. L'organe 118a de chaque élément de verrouillage 118 est alors rappelé dans sa première position sous l'effet de l'effort centripète exercé par la bague de verrouillage 218 et s'engage dans la gorge 220. En effet, la bague 218 est rappelée vers l'avant sous l'action du ressort élastique 230. Toutefois, cet effort axial est transformé en un effort radial centripète F3 par effet de coin, ceci grâce à la coopération des chanfreins 218.1 et 132, respectivement de la bague 218 et de l'organe 118a, l'un avec l'autre. L'effort radial centripète F3 est exercé sur l'organe 118a.

En outre, le rappel de l'organe 118a vers sa première position est avantageusement favorisé par le retour élastique des bras 118b et 118c.

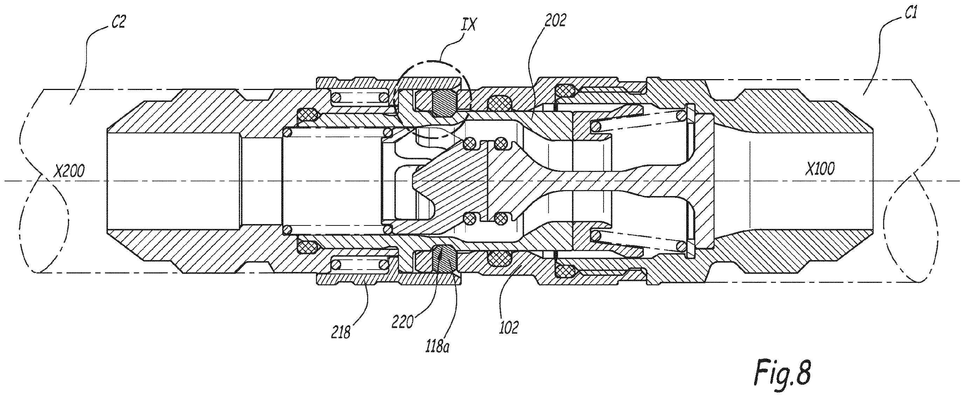

Une fois que les organes 118a se trouvent dans leur première position, à l'intérieur de la gorge 220, ils ne s'opposent plus au rappel de la bague 218 en position de verrouillage. Celle-ci est alors rappelée vers l'avant par le ressort 230, ce qui assure le verrouillage automatique du raccord R. Le raccord R est représenté en configuration accouplée à la figure 8.

Comme visible à la figure 9, en configuration accouplée du raccord R, l'organe 118a de chaque élément de verrouillage 118 est maintenu à l'intérieur de la gorge 220 grâce à trois zones de contact définies, premièrement, entre le chanfrein arrière de la face intérieure, respectivement 122 ou 124 selon l'élément de verrouillage considéré, et le bord arrière 224 de la gorge 220, deuxièmement, entre la surface cylindrique extérieure 136 et la surface radiale interne S218i de la bague 218 et, troisièmement, entre la face axiale avant de l'organe 118a, respectivement 140 ou 142 selon l'élément de verrouillage considéré, et une paroi avant des ouvertures 104. Le fait que les organes 118a des éléments de verrouillage 118 sont guidés de manière purement radiale à l'intérieur des ouvertures 104 garantit un bon alignement des surfaces de contact les unes par rapport aux autres dans les trois zones précitées ainsi qu'un bon alignement des surfaces chanfreinées 218.1 et 132. Autrement dit, cela garantit un contact plan sur plan dans toutes les zones de contact entre l'organe 118a et les pièces 202 et 218 de l'élément mâle 200. Le risque de matage du corps 202 de l'élément mâle 200 est alors limité à long terme, ce qui rend le raccord R relativement robuste.

Ainsi, l'accouplement du raccord R est obtenu simplement en rapprochant les deux éléments de raccord 100 et 200, sans aucune autre manipulation. L'accouplement est généralement effectué alors que la pression du fluide dans les conduites C1 et C2 est faible pour limiter les efforts d'accouplement.

Pour désaccoupler le raccord R, il convient de reculer manuellement la bague de verrouillage 218 vers sa position déverrouillée et d'écarter les deux éléments de raccord 100 et 200 l'un de l'autre.

En position déverrouillée, la bague 218 ne s'oppose pas au déplacement de l'organe 118a de sa première position vers sa deuxième position. De fait, lorsque les éléments 100 et 200 sont éloignés l'un de l'autre, l'organe 118a de chaque élément de verrouillage 118 se déplace automatiquement de sa première position vers sa deuxième position. Plus précisément, l'effort axial de retrait du corps mâle 202 est transformé en un effort radial centrifuge par effet de coin, lequel effet est obtenu par coopération des surfaces tronconiques 124 et 224, respectivement de l'organe 118a et de la gorge 220. Cet effort radial centrifuge est exercé sur l'organe 118a qui est ainsi éjecté de la gorge 220.

Par ailleurs, le retrait du corps 202 de l'élément mâle 200 à l'extérieur du corps 102 de l'élément femelle 100 est favorisé par l'action de rappel des ressorts de soupape 114 et 214, de sorte que le désaccouplement s'effectue sans effort excessif de la part de l'opérateur.

La poursuite du désaccouplement entraine que le clapet 112 et la soupape 210 reviennent respectivement chacun en position d'obturation : le fluide ne circule plus entre les deux éléments de raccord.

A un stade ultérieur du désaccouplement, le corps 202 ne coopère plus avec l'organe 118a des éléments de verrouillage 118. Grâce au rappel élastique des bras 118b et 118c, l'organe 118a de chaque élément de verrouillage revient dans sa première position, dans laquelle il dépasse par rapport à la surface S102i mais pas par rapport à la surface S102e. Le raccord R est désaccouplé.

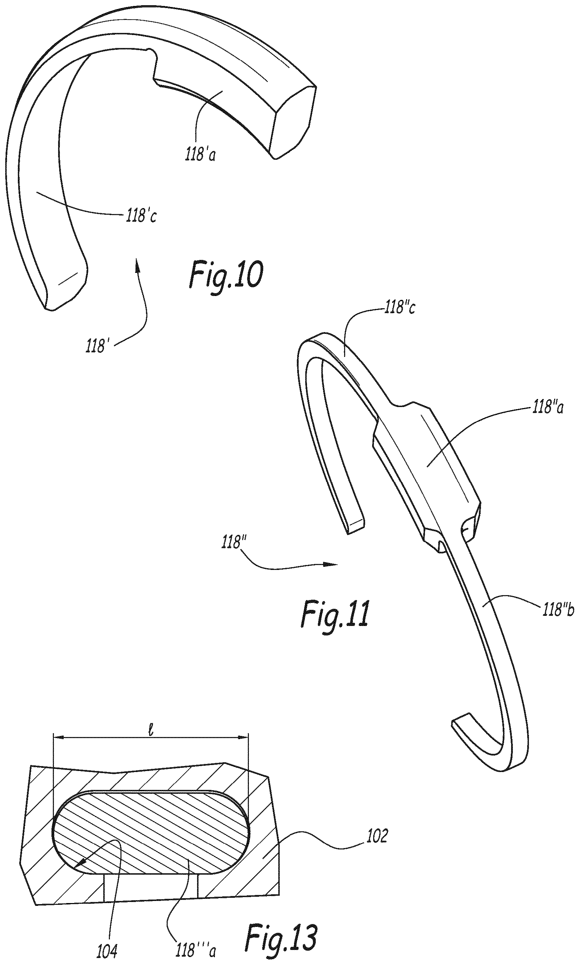

Sur les figures 10, 11 et 13 sont respectivement représentés, de façon partielle, un deuxième mode de réalisation, un troisième mode de réalisation et un quatrième mode de réalisation d'un raccord conforme à l'invention. Dans ces deuxième, troisième et quatrième modes de réalisation, des éléments de verrouillage différents sont utilisés. Dans ce qui suit, seules les différences par rapport au premier mode de réalisation sont mentionnées par souci de concision.

En particulier, dans le mode de la réalisation de la figure 10, l'élément femelle 100 comprend deux éléments de verrouillage 118' comportant chacun un corps 118'a formant l'organe de l'élément de verrouillage et un unique bras élastique 118'c. Les deux éléments de verrouillage 118' sont montés tête bêche, c'est-à-dire que les organes respectifs 118'a des deux éléments de verrouillage 118' sont agencés de manière diamétralement opposée l'un par rapport à l'autre.

Le bras élastique 118'c présente une largeur, mesurée parallèlement à l'axe central X100, qui est identique à celle de l'organe 118'a.

Contrairement au premier mode de réalisation, il n'est pas nécessaire de retourner l'un des éléments de verrouillage 118' par rapport à l'autre pour pouvoir le monter sur le corps cylindrique creux 102.

Avantageusement, les chanfreins 122 et 124 deux éléments de verrouillage 118' ne sont pas identiques. ce qui permet d'optimiser séparément l'écartement des éléments de verrouillage 118' par le corps 202 de l'élément mâle 200 et le verrouillage à l'intérieur de la gorge périphérique 220. Il est en particulier possible d'envisager une gorge périphérique avec un profil en arc de cercle et un chanfrein 124 non rectiligne mais bombé.

Dans le mode de réalisation de la figure 11, l'élément femelle 100 comprend deux éléments de verrouillage 118" comportant un corps 118"a ayant une largeur supérieure à celle du corps 118a des éléments 118 appartenant au raccord conforme au premier mode de réalisation de l'invention. Cela permet d'avoir une section de l'organe de verrouillage 118" plus importante, Cette section doit résister aux contraintes de cisaillement dues aux efforts de répulsion entre les éléments mâle 200 et femelle 100 lorsque qu'ils sont accouplés. La gorge périphérique 220 du corps 202 présente également une largeur supérieure à celle de la gorge 220 du raccord conforme au premier mode de réalisation de l'invention. De ce fait, les ouvertures 104 présentent une largeur qui est supérieure à celle de la rainure périphérique 106. Dans ce mode de réalisation, les bras 118"b et 118"c ne sont plus affleurants avec une face latérale du corps 118".

En variante non représentée, le raccord ne comprend qu'un seul élément de verrouillage 118. Sur des raccords de conduite de grand diamètre, il est aussi envisageable d'avoir plus de deux éléments de verrouillage 118, par exemple trois ou quatre éléments de verrouillage 118.

Selon le mode de réalisation représentée à la figure 13, le corps de l'élément de verrouillage, c'est-à-dire l'organe 118"'a présente une section, dans un plan perpendiculaire au plan de symétrie P118, qui est définie par deux segments égaux et parallèles raccordés à leurs extrémités par deux demi-cercles. L'organe 118"'a a donc une section oblongue et arrondie. L'organe 118"'a est guidé dans son mouvement le long d'un axe radial dans une ouverture radiale 104 du corps cylindrique 102 dont la projection sur un plan perpendiculaire à l'axe radial est également définie par deux segments égaux et parallèles raccordés à leurs extrémités par deux demi-cercles.

Selon d'autres variantes non représentées, l'organe au corps de l'élément de verrouillage peut avoir une section elliptique ou hexagonale, qui interdit également toute rotation de l'élément de verrouillage autour d'un axe radial.

L'invention a été décrite suivant des modes de réalisation dans lesquelles les éléments de verrouillage se déplacent suivant un axe radial Y100 strictement perpendiculaire à l'axe central X100. Elle peut être mise en oeuvre avec un déplacement des éléments de verrouillage suivant un axe radial incliné de plus ou moins 30 degrés, dans le plan de la figure 2, par rapport à une perpendiculaire à l'axe X100. Un tel axe incliné est dit radial car il s'étend selon une direction radiale à l'axe central X100, même s'il s'étend également selon une direction axiale.

## Revendications

1. Raccord rapide (R) pour la jonction amovible de canalisation (C1, C2) de fluide sous pression, ce raccord comprenant un élément mâle (200) et un élément femelle (100) destinés à être accouplés l'un avec l'autre, l'élément femelle (100) comportant :
- un corps cylindrique creux (102) centré sur un axe central (X100) et comportant une surface radiale interne (S102i) et une surface radiale externe (S102e) et délimitant une ouverture radiale (104), et
- un élément de verrouillage (118; 118'; 118"), comprenant un organe (118a; 118'a; 118"a; 118"'a) qui est mobile en translation, suivant un axe de translation (Y100) radial par rapport à l'axe central, à l'intérieur de l'ouverture radiale (104), laquelle est apte à guider l'organe (118a; 118'a; 118"a; 118"'a) entre une première position, dans laquelle l'organe (118a; 118'a; 118"a; 118"'a) fait saillie vers l'intérieur par rapport à la surface radiale interne (S102i) et une deuxième position, dans laquelle l'organe (118a; 118'a; 118"a; 118"'a) fait saillie vers l'extérieur par rapport à la surface radiale externe (S102e) et dans laquelle l'organe (118a; 118'a; 118"a; 118"'a) ne fait pas saillie vers l'intérieur par rapport à la surface radiale interne,
l'élément mâle (200) comportant :
- un corps cylindrique creux (202), qui est prévu pour être engagé à l'intérieur du corps cylindrique creux (102) de l'élément femelle (100) et qui comprend une surface périphérique extérieure (S202e) pourvue d'une gorge périphérique (220) de réception de l'organe mobile (118a; 118'a; 118"a; 118"'a),
- une bague de verrouillage (218) qui est mobile axialement entre une position de verrouillage, dans laquelle elle entoure la gorge périphérique (220) et une position déverrouillée, dans laquelle elle n'entoure pas la gorge périphérique, l'élément de verrouillage (118; 118'; 118") étant apte à entrainer la bague de verrouillage (218) de sa position de verrouillage vers sa position déverrouillée lorsque son organe (118a; 118'a; 118"a; 118"'a) est dans sa deuxième position,
- des moyens (230) de rappel de la bague de verrouillage (218) en position de verrouillage,
le raccord étant **caractérisé en ce que** l'élément de verrouillage (118; 118'; 118") comporte au moins un bras élastique (118b ; 118'b ; 118"b) apte à rappeler l'organe (118a; 118'a; 118"a; 118"'a) vers sa première position.

2. Raccord selon la revendication 1, **caractérisé en ce que** l'organe (118a; 118'a; 118"a; 118"'a) comprend un chanfrein (122, 124) propre à coopérer, lors de l'accouplement, avec une arête (202a) de jonction entre la surface périphérique extérieure (S202e) et une surface axiale d'extrémité (S202) du corps cylindrique creux (202) de l'élément mâle (200).

3. Raccord selon la revendication 1 ou 2, **caractérisé en ce que** l'organe (118a; 118'a; 118"a; 118"'a) comprend un chanfrein (122, 124) propre à coopérer avec un bord complémentaire (224) de la gorge périphérique (220) en configuration accouplée.

4. Raccord selon l'une des revendications précédentes, **caractérisé en ce que** la bague de verrouillage (218) comprend à, une extrémité axiale, un chanfrein intérieur (218.1) propre à coopérer avec l'organe (118a; 118'a; 118"a; 118"'a) lors de l'accouplement.

5. Raccord selon l'une des revendications précédentes, **caractérisé en ce que** l'élément de verrouillage (118; 118'; 118") est en matière plastique.

6. Raccord selon l'une des revendications précédentes, **caractérisé en ce que** l'élément de verrouillage comprend deux bras élastiques (118b, 118c ; 118"b, 118"c) qui s'étendent de manière symétrique à partir de l'organe (118a; 118"a; 118"'a).

7. Raccord selon l'une des revendications précédentes, **caractérisé en ce que** chaque bras élastique (118b, 118c ; 118'b ; 118"b, 118"c) est en arc de cercle, le rayon de courbure (r118) de la surface radiale interne (118bi) du bras (118b) étant identique au rayon de courbure (R106) de la surface radiale externe (S102e) du corps cylindrique creux (102) de l'élément femelle (100) au niveau de la zone d'appui de ce bras sur ce corps.

8. Raccord selon la revendication 7, **caractérisé en ce que** chaque bras élastique (118b, 118c ; 118'b ; 118"b, 118"c) est reçu dans une rainure (106) s'étendant de manière périphérique sur la surface radiale externe (S102e) du corps cylindrique creux (102) de l'élément femelle (100).

9. Raccord selon l'une des revendications 7 ou 8, **caractérisé en ce que** chaque bras (118b, 118c ; 118'b ; 118"b, 118"c) s'étend de sorte que son extrémité libre délimite avec un plan de symétrie (P118) de l'organe (118a; 118'a; 118"a; 118"'a) un angle (β, γ) qui est compris entre 90° et 120°.

10. Raccord selon l'une des revendications précédentes, **caractérisé en ce que** l'organe mobile (118a; 118'a; 118"a; 118"'a) ne fait pas saille vers l'extérieur par rapport à la surface radiale externe (S102e) du corps cylindrique creux (102) de l'élément femelle lorsqu'il se trouve dans sa première position.

11. Raccord selon l'une des revendications précédentes, **caractérisé en ce que** l'élément femelle (100) comprend deux éléments de verrouillage (118; 118'; 118") et **en ce que** le corps cylindrique creux (102) de l'élément femelle (100) délimite deux ouvertures radiales (104) diamétralement opposées pour recevoir les organes mobiles respectifs (118a; 118'a; 118"a; 118"'a) des éléments de verrouillage (118; 118'; 118").

12. Raccord selon l'une des revendications précédentes, **caractérisé en ce que** la projection de l'organe mobile (118a; 118'a; 118"a; 118"'a) sur un plan perpendiculaire à l'axe de translation radial (Y100) présente un contour non circulaire.

13. Raccord selon la revendication 12, **caractérisé en ce que** la projection de l'organe mobile (118a; 118'a; 118"a) sur le plan perpendiculaire à l'axe de translation radial (Y100) présente un contour rectangulaire.

14. Raccord selon l'une des revendications 12 ou 13, **caractérisé en ce que** la projection de l'organe mobile (118a; 118'a; 118"a; 118"'a) sur le plan perpendiculaire à l'axe de translation radial (Y100) s'étend sur une longueur transversale (ℓ) comprise entre 10 et 50% de la valeur du diamètre définissant la surface radiale interne (S102i) du corps cylindrique (102) de l'élément femelle (100) et notamment égal à 40%.

15. Raccord selon l'une des revendications précédentes, **caractérisé en ce que** l'élément mâle (200) comporte une soupape (210) contenue dans le corps cylindrique creux (202) et rappelée vers une position de fermeture d'un volume (211) de passage de fluide, dans laquelle les extrémités avant (S202, S210) du corps cylindrique creux (202) de l'élément mâle (200) et de la soupape (210) définissent une surface plane et **en ce que** l'élément femelle (100) comporte un poussoir (110) placé à l'intérieur du corps cylindrique creux (102) et apte à repousser la soupape (210) de l'élément mâle (200) lors de l'accouplement et un clapet (112) placé entre la partie avant du poussoir (110) et le corps cylindrique creux (102) et rappelé par un ressort vers une position de fermeture d'un volume (111) de passage du fluide, dans laquelle les extrémités avant (S110, S112) du poussoir (110) et du clapet (112) définissent une surface plane située en arrière des éléments de verrouillage (118; 118'; 118").

## Patentansprüche

1. Schnellkupplung (R) für die lösbare Verbindung von Leitungen (C1, C2) für ein unter Druck stehendes Fluid, wobei diese Kupplung ein Einsteckelement (200) und ein Aufnahmeelement (100) umfasst, die dazu dienen, ineinandergesteckt zu werden, wobei das Aufnahmeelement (100) umfasst:
- einen zylindrischen Hohlkörper (102), der auf eine Mittelachse (X100) zentriert ist und eine radiale Innenfläche (S102i) und eine radiale Außenfläche (S102e) aufweist und eine radiale Öffnung (104) begrenzt, und
- ein Verriegelungselement (118; 118'; 118"), das ein Teil (118a; 118'a; 118"a; 118"'a) umfasst, das linear gemäß einer radial in Bezug auf die Mittelachse liegenden Verschiebungsachse (Y100) in das Innere der radialen Öffnung (104) beweglich ist, die geeignet ist, das Teil (118a; 118'a; 118"a; 118"'a) zwischen einer ersten Position, in der das Teil (118a; 118'a; 118"a; 118"'a) in Bezug auf die radiale Innenfläche (S102i) nach innen hervorspringt, und einer zweiten Position, in der das Teil (118a; 118'a; 118"a; 118"'a) in Bezug auf die radiale Außenfläche (S102e) nach außen hervorspringt und in der das Teil (118a; 118'a; 118"a; 118"'a) nicht in Bezug auf die radiale Innenfläche nach innen hervorspringt, zu führen,
wobei das Einsteckelement (200) umfasst:
- einen zylindrischen Hohlkörper (202), der vorgesehen ist, in das Innere des zylindrischen Hohlkörpers (102) des Aufnahmeelements (100) einzugreifen und der eine äußere Umfangsfläche (S202e) aufweist, die mit einer Umfangsnut (220) zur Aufnahme des beweglichen Teils (118a; 118'a; 118"a; 118"'a) versehen ist,
- eine Verriegelungsbuchse (218), die axial zwischen einer Verriegelungsposition, in der sie die Umfangsnut (220) umgibt, und einer entriegelten Position, in der sie die Umfangsnut nicht umgibt, beweglich ist, wobei das Verriegelungselement (118; 118'; 118") in der Lage ist, die Verriegelungsbuchse (218) von ihrer Verriegelungsposition in ihre entriegelte Position mitzunehmen, wenn sein Teil (118a; 118'a; 118"a; 118"'a) in seiner zweiten Position ist,
- Mittel (230) zum Zurückstellen der Verriegelungsbuchse (218) in die Verriegelungsposition,
wobei die Kupplung **dadurch gekennzeichnet ist, dass** das Verriegelungselement (118; 118'; 118") mindestens einen elastischen Arm (118b; 118'b; 118"b) aufweist, der geeignet ist, das Teil (118a; 118'a; 118"a; 118"'a) in seine erste Position zurückzustellen.

2. Kupplung nach Anspruch 1, **dadurch gekennzeichnet, dass** das Teil (118a; 118'a; 118"a; 118"'a) eine Fase (122, 124) umfasst, die geeignet ist, bei dem Zusammenkuppeln mit einer Verbindungskante (202a) zwischen der äußeren Umfangsfläche (S202e) und einer axialen Endfläche (S202) des zylindrischen Hohlkörpers (202) des Einsteckelements (200) zusammenzuarbeiten.

3. Kupplung nach Anspruch 1 oder 2, **dadurch gekennzeichnet, dass** das Teil (118a; 118'a; 118"a; 118"'a) eine Fase (122, 124) umfasst, die geeignet ist, mit einem komplementären Rand (224) der Umfangsnut (220) in der zusammengekuppelten Stellung zusammenzuarbeiten.

4. Kupplung nach einem der vorhergehenden Ansprüche, **dadurch gekennzeichnet, dass** die Verriegelungsbuchse (218) an einem axialen Ende eine Innenfase (218.1) umfasst, die geeignet ist, mit dem Teil (118a; 118'a; 118"a; 118"'a) bei dem Zusammenkuppeln zusammenzuarbeiten.

5. Kupplung nach einem der vorhergehenden Ansprüche, **dadurch gekennzeichnet, dass** das Verriegelungselement (118; 118'; 118") aus einem Kunststoff hergestellt ist.

6. Kupplung nach einem der vorhergehenden Ansprüche, **dadurch gekennzeichnet, dass** das Verriegelungselement zwei elastische Arme (118b, 118c; 118"b, 118"c) umfasst, die sich in symmetrischer Weise vom Teil (118a; 118"a; 118"'a) weg erstrecken.

7. Kupplung nach einem der vorhergehenden Ansprüche, **dadurch gekennzeichnet, dass** jeder elastische Arm (118b, 118c; 118'b; 118"b, 118"c) kreisbogenförmig ist, wobei der Krümmungsradius (r118) der radialen Innenfläche (118bi) des Arms (118b) identisch zu dem Krümmungsradius (R106) der radialen Außenfläche (S102e) des zylindrischen Hohlkörpers (102) des Aufnahmeelements (100) an der Anlagezone dieses Arms an diesem Körper ist.

8. Kupplung nach Anspruch 7, **dadurch gekennzeichnet, dass** jeder elastische Arm (118b, 118c; 118'b; 118"b, 118"c) in einer Nut (106) aufgenommen ist, die sich umfänglich auf der radialen Außenfläche (S102e) des zylindrischen Hohlkörpers (102) des Aufnahmeelements (100) erstreckt.

9. Kupplung nach einem der Ansprüche 7 oder 8, **dadurch gekennzeichnet, dass** jeder Arm (118b, 118c; 118'b; 118"b, 118"c) sich derart erstreckt, dass sein freies Ende mit der Symmetrieebene (P118) des Teils (118a; 118'a; 118"a; 118"'a) einen Winkel (β, γ) einschließt, der zwischen 90° und 120° liegt.

10. Kupplung nach einem der vorhergehenden Ansprüche, **dadurch gekennzeichnet, dass** das bewegliche Teil (118a; 118'a; 118"a; 118"'a) in Bezug auf die radiale Außenfläche (S102e) des zylindrischen Hohlkörpers (102) des Aufnahmeelements nicht nach außen hervorspringt, wenn es sich seiner ersten Position befindet.

11. Kupplung nach einem der vorhergehenden Ansprüche, **dadurch gekennzeichnet, dass** das Aufnahmeelement (100) zwei Verriegelungselemente (118; 188'; 118") umfasst und dass der zylindrische Hohlkörper (102) des Aufnahmeelements (100) zwei sich diametral gegenüberstehende radiale Öffnungen (104) zur Aufnahme der jeweiligen beweglichen Teile (118a; 118'a; 118"a; 118"'a) der Verriegelungselemente (118; 118'; 118") begrenzt.

12. Kupplung nach einem der vorhergehenden Ansprüche, **dadurch gekennzeichnet, dass** die Projektion des beweglichen Teils (118a; 118'a; 118"a; 118"'a) auf eine Ebene senkrecht zur radialen Verschiebungsachse (Y100) eine nichtkreisförmige Kontur aufweist.

13. Kupplung nach Anspruch 12, **dadurch gekennzeichnet, dass** die Projektion des beweglichen Teils (118a; 118'a; 118"a) auf die Ebene senkrecht zur radialen Verschiebungsachse (Y100) eine rechteckige Kontur aufweist.

14. Kupplung nach einem der Ansprüche 12 oder 13, **dadurch gekennzeichnet, dass** die Projektion des beweglichen Teils (118a; 118'a; 118"a; 118"'a) auf die Ebene senkrecht zur radialen Verschiebungsachse (Y100) sich über eine transversale Länge (l) erstreckt, die zwischen 10 und 50% des Wertes des Durchmessers liegt, der die radiale Innenfläche (S102i) des zylindrischen Körpers (102) des Aufnahmeelements (100) definiert, und insbesondere gleich 40% ist.

15. Kupplung nach einem der vorhergehenden Ansprüche, **dadurch gekennzeichnet, dass** das Einsteckelement (200) ein Ventil (210) aufweist, das in dem zylindrischen Hohlkörper (202) eingeschlossen ist und das zu einer Position des Verschließens eines Volumens (211) für den Durchgang des Fluids vorgespannt ist, in der die vorderen Enden (S202, S210) des zylindrischen Hohlkörpers (202) des Einsteckelements (200) und des Ventils (210) eine ebene Fläche begrenzen, und dass das Aufnahmeelement (100) einen Stößel (110) aufweist, der im Inneren des zylindrischen Hohlkörpers (102) angeordnet ist und geeignet ist, das Ventil (210) des Einsteckelements (200) bei dem Zusammenkuppeln zurückzuschieben, und ein Ventil (112) aufweist, das zwischen dem vorderen Teil des Stößels (110) und dem zylindrischen Hohlkörper (102) angeordnet ist und durch eine Feder zu einer Position des Verschließens eines Volumens (111) des Fluiddurchgangs vorgespannt ist, in der die vorderen Enden (S110, S11) des Stößels (110) und des Ventils (112) eine ebene Fläche begrenzen, die hinter den Verriegelungselementen (118; 118'; 118") liegt.

## Claims

1. A quick coupling (R) for the disconnectable connection of pipelines (C1, C2) for a pressurized fluid, this coupling comprising a plug element (200) and a socket element (100) intended to be coupled with one another, the socket element including:
- a hollow cylindrical body (102) centered on a central axis (X100) and including an inner radial surface (S102i) and an outer radial surface (S102e) and defining a radial opening, (104), and
- a locking element (118; 118', 118"), comprising a translatable member (118a; 118'a; 118"a; 118"'a), along a radial translation axis (Y100) relative to the central axis, inside the radial opening (104), which is able to guide the member (118a; 118'a, 118"a; 118"'a) between a first position, in which the member protrudes inward relative to the inner radial surface (S102i), and a second position, in which the member protrudes outward relative to the outer radial surface (S102e) and in which the member (118a) does not protrude inward relative to the inner radial surface,
the plug element (200) including:
- a hollow cylindrical body (202), which is provided to be engaged inside the hollow cylindrical body (102) of the socket element (100) and which comprises an outer peripheral surface (S202e) provided with a peripheral groove (220) for receiving the movable member (118a; 118'a; 118"a; 118"'a),
- a locking ring (218) that is axially movable between a locking position, in which it surrounds the peripheral groove (220), and an unlocked position, in which it does not surround the peripheral groove, the locking element (118; 118'; 118") being able to drive the locking ring (218) from its locking position toward its unlocked position when its member (118a; 118'a; 118"a) is in its second position,
- means (230) for returning the locking ring (218) to the locking position,
the coupling being **characterized in that** the locking element (118; 118'; 118") includes at least one elastic arm (118b; 118'b; 118"b) able to return the member (118a; 118'a; 118"a; 118"'a) toward its first position.

2. The coupling according to claim 1, **characterized in that** the member (118a; 118'a; 118"a; 118"'a) comprises a bevel (122, 124) able to cooperate during coupling with a junction edge (202a) between the outer peripheral surface (S202e) and an axial end surface (S202) of the hollow cylindrical body (202) of the plug element (200).

3. The coupling according to claim 1 or 2, **characterized in that** the member (118a; 118'a; 118"a; 118"'a) comprises a bevel (122, 124) able to cooperate with a complementary edge (224) of the peripheral groove (220) in the coupled configuration.

4. The coupling according to one of the preceding claims, **characterized in that** the locking ring (218) comprises, at one axial end, an inner bevel (218.1) able to cooperate with the member (118a; 118'a; 118"a; 118"'a) during coupling.

5. The coupling according to one of the preceding claims, **characterized in that** the locking element (118; 118'; 118") is made from plastic.

6. The coupling according to one of the preceding claims, **characterized in that** the locking element comprises two elastic arms (118b, 118c; 118"b, 118"c) that extend symmetrically from the member (118a; 118"a; 118"'a).

7. The coupling according to one of the preceding claims, **characterized in that** each elastic arm (118b, 118c; 118'b; 118"b, 118"c) is an arc of circle, the curve radius (r118) of the inner radial surface (118bi) of the arm (118b) being identical to the curve radius (R106) of the outer radial surface (S102e) of the hollow cylindrical body (102) of the socket element (100) at the bearing zone of this arm on this body.

8. The coupling according to claim 7, **characterized in that** each elastic arm (118b, 118c' 118'b; 118"b, 118"c) is received in a slot (106) extending peripherally over the outer radial surface (S102e) of the hollow cylindrical body (102) of the socket element (100).

9. The coupling according to one of claims 7 or 8, **characterized in that** each arm (118b, 118c; 118'b; 118"b, 118"c) extends such that its free end defines, with a plane of symmetry (P118) of the member (118a; 118'a; 118"a; 118"'a), an angle (β, γ) comprised between 90° and 120°.

10. The coupling according to one of the preceding claims, **characterized in that** the moving member (118a; 118'a; 118"a; 118"'a) does not protrude outward relative to the outer radial surface (S102e) of the hollow cylindrical body (102) of the socket element when it is in its first position.

11. The coupling according to one of the preceding claims, **characterized in that** the socket element (100) comprises two locking elements (118; 118'; 118") and **in that** the hollow cylindrical body (102) of the socket element (100) defines two diametrically opposite radial openings (104) to receive the respective moving members (118a; 118'a; 118"a; 118"'a) of the locking elements (118; 118'; 118").

12. The coupling according to one of the preceding claims, **characterized in that** the projection of the moving member (118a; 118'a; 118"a; 118"'a) over a plane perpendicular to the radial translation axis (Y100) has a noncircular contour.

13. The coupling according to claim 12, **characterized in that** the projection of the moving member (118a; 118'a; 118"a) over the plane perpendicular to the radial translation axis (Y100) has a rectangular contour.

14. The coupling according to one of claims 12 or 13, **characterized in that** the projection of the moving member (118a; 118'a; 118"a; 118"'b) over the plane perpendicular to the radial translation axis (Y100) extends over a transverse length (t) comprised between 10 and 50% of the value of the diameter defining the inner radial surface (S102i) of the cylindrical body (102) of the socket element (100), and in particular equal to 40%.

15. The coupling according to one of the preceding claims, **characterized in that** the plug element (200) includes a valve (210) contained in the hollow cylindrical body (202) and recalled toward a closed position of a fluid passage volume (211), in which the front ends (S202, S210) of the hollow cylindrical body (202) of the plug element (200) and the valve (210) define a planar surface and **in that** the socket element (100) includes a plunger (110) placed inside the hollow cylindrical body (102) and able to push the valve (210) of the plug element (200) back during coupling and a gate (112) placed between the front part of the plunger (110) and the hollow cylindrical body (102) and recalled by a spring toward a position closing a fluid passage volume (111), in which the front ends (S110, S112) of the plunger (110) and the gate (112) define a planar surface situated behind the locking elements (118; 118'; 118").
